# EUROPEAN PATENT APPLICATION

(11) **EP 0 860 271 A1**
(43) Date of publication of application: **26.08.1998**
(21) Application number: 97102674.5
(22) Date of filing: 19.02.1997
(51) Int. Cl.: B32B 27/20, B65D 65/40, B65D 75/34

(54) **A sheet for packaging material**

(71) Applicant: FUJIMORI KOGYO CO., LTD., Tokyo 103 (JP)
(72) Inventor: Oguni, Moritoshi, c/o Fujimori Kogyo Co., Ltd., Chuo-ku, Tokyo 103 (JP); Sasaki, Akira, c/o Fujimori Kogyo Co. Ltd., Chuo-ku, Tokyo 103 (JP); Hasegawa, Tetsu, c/o Fujimori Kogyo Co. Ltd., Chuo-ku, Tokyo 103 (JP)
(74) Representative: Kraus, Walter, Dr.

(57) **Abstract**

A sheet for packaging material wherein said sheet comprises polypropylene layer containing inorganic powder and is laminated or coated with a resin layer suitable for printing on at least one surface of the polypropylene layer. Said sheet for packaging material is used for a body portion and/or a lid portion of a portion container and for a sealing seat of press through sheet.

## Description

This invention relates to a laminated polypropylene packaging sheet for a portion container or for a sealing sheet of press through packaging whose printability necessitated as a portion container or a sealing sheet of press through pack is improved.

A portion container is a package in which milk, pudding, yogurt or others are packed, composed by a container body which is generally formed by molding a plastic sheet by means of a deep-drawing molding method, and a lid to be stuck to an upper brim of the container body. Said container body and the lid are made of polyolefin, especially polypropylene sheets containing an inorganic powder as an additive These sheets are preferable because of easy burning without high temperature and easy pealing a lid from the container body.

As above mentioned, since a portion container is formed by molding of a plastic sheet containing an inorganic powder, surface of the container body and the lid tend to be coarser. Therefore, it is difficult to print fine patterns on these surfaces, and even if fine patterns are printed, the patterns are easily scratched off and also have a problem that the printed patterns are not clear.

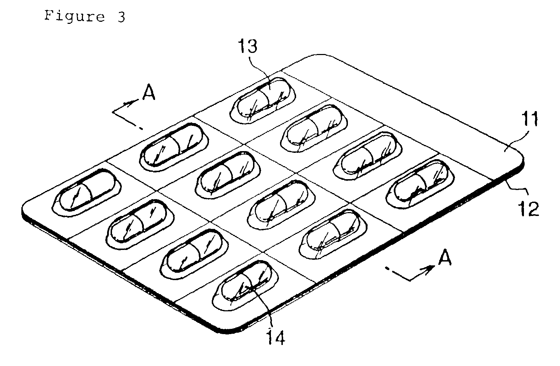

Meanwhile, as shown in figure 3, a press through packaging (hereafter shortened as "PTP") is a container composed by a main body made of plastic sheet 11 having plural concave pocket 13 and by a sealing sheet made of aluminium foil. In each pocket 13 one capsule type or tablet type medicine is contained and whole surface is sealed by aluminium foil 12. As a plastic sheet for the main body, polyvinylchloride resin used to be applied, but, recently from the view point of environmental preservation polyvinylchloride resin and aluminium foil are avoided, and polypropylene sheets are becoming popular to be applied as the main body and the sealing sheet. For the object to pick out a contained medicine easily, an easy breaking of the sealing sheet is needed, and polyolefin sheets containing an inorganic powder especially such as calcium carbonate powder are practically used. However, powder type additives make the surface coarser, and the presence of problems that the printed patterns indicates explanation such as efficiency, product mark and name of producer are not clear or in the worst case erased off, is pointed out.

The inventors of this invention have conduced intensive studies to dissolve above mentioned problems and accomplished present invention. The object of this invention is to provide a sheet for packaging material whose printability is improved, with maintaining the necessary features for a container body and a lid, that is, easy burning out and easy peeling, and further to provide a sheet for a sealing sheet of PTP which has a good printability.

The important point of this invention is illustrated as follows. That is, a sheet for packaging material wherein said sheet comprises polypropylene layer containing inorganic powder and is laminated or coated with a resin layer suitable for printing on at least one surface of the polypropylene layer.

Namely, in this invention, in a conventional sheet for a portion container or a sealing sheet of PTP comprised by polypropylene sheets containing an inorganic powder, the printability is improved by laminating a resin layer at least one side of said sheet, without lack of the original features of a conventional sheet for a portion container.

As the polypropylene sheets used for a laminated sheet for a portion container or a sealing sheet of PTP of this invention, a polypropylene homopolymer sheet or ethylene-propylene copolymer sheet of 20-150µm thick is suitable. Especially, as a sealing sheet of PTP, an uniaxial oriented sheet is desirably used because it is torn easily. And, as the inorganic powder to be added to the polypropylene sheets, inorganic fillers which are usually used as a conventional additive for plastics, such as silicon dioxide, silicate, titanate, aluminium oxide, kaoline and calcium carbonate can be mentioned, and the amount to be added is 10-60wt%. The size of said inorganic fillers are desirable to be 5 to 100µm at maximum length of particle.

In this invention, the method to laminate a resin film layer on a surface of polypropylene sheet is laminating a resin film or coating resin varnish or paint.

In the method to laminate a resin film at least on one surface of the polypropylene sheet, it is desirable to laminate polyolefin resin such as polyethylene or polypropylene, and preferable thickness is 1-20µm. If the thickness is thicker than 20µm, features necessary as a sealing sheet are damaged, and if the thickness is thinner than 1µm, the printability is not sufficient.

As the method to laminate polyolefin resin films, following public-known methods can be preferably applied ; A extrusion laminating method, extrude melting polyolefin resin on the surface of polypropylene sheet containing an inorganic filler. A co-extrusion laminating method, extrude melting polyolefin resin and melting polypropylene resin containing an inorganic filler simultaneously. A dry laminating method, a resin film of polyolefin is adhered to a polypropylene sheet containing an inorganic filler using adhesives such as isocyanate, urethane or acrylic.

And, in the method to laminate a resin layer at least on one surface of the polypropylene sheet surface by a method to coat varnish or paint, it is desirable to use a resin varnish, for instance, cellulose varnish such as nitro-cellulose or cellulose acetate, ethylene-vinylacetate, varnish, polyamide varnish, polyester varnish, acrylic varnish, epoxy varnish, urethane varnish or chloride rubber varnish. And the desirable thickness to coat is about 1-5µm.

As the method to coat a resin varnish, public-known methods such as a roll-coating or a gravure-coating can be applied and mentioned varnishs are coated on at least one surface of the polypropylene sheet, or, a method to coat these varnishs on the surface of the carrier film such as polyester film then transprint a thin film of these varnishs formed on the polyester film to at least one surface of polypropylene sheet by pressing can be also applied. By applying said transprinting method, it is possible to make a coating layer thinner.

Further, by preparing a resin layer using a paint including pigment such as titanium oxide or dye, concealment covering of paints is improved, and prints becomes clear.

Patterns are printed on said resin layer prepared by above mentioned method, then a transparent resin layer (OP varnish) can be prepared on said printed layer. As the resin composing the transparent resin layer, it is desirable to use cellulose such as nitro-cellulose or cellulose acetate, ethylene-vinylacetate, polyamide, polyester, acrylic, epoxy, urethane or chloride rubber. These resins are generally dissolved in organic solvent and form a resin varnish (OP varnish) and is coated over the surface of the prints. As the method to coat the resin varnish, a roll-coating or gravure-coating method can be applied, and the desirable thickness of it is 1 to 5µm. By preparing said transparent resin layer, the printing layer can be protected from the erasing and scratching.

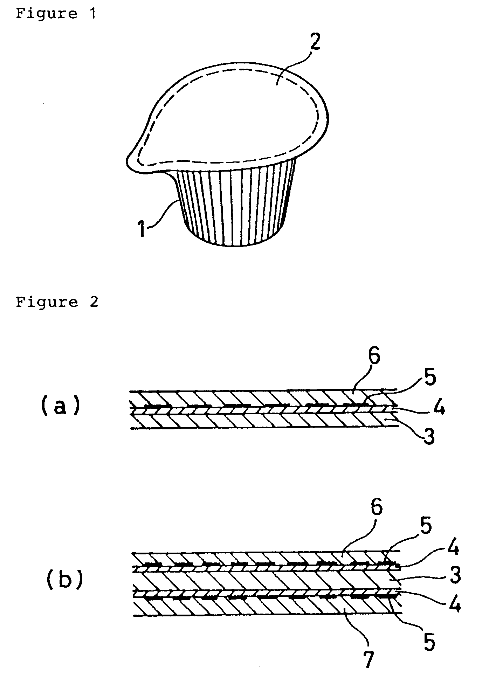

The object of the present invention will be further illustrated by the drawings. Figure 1 is a perspective view of a portion container, figure 2(a) is a vertical sectional view of a laminate materials for portion container on one side of which a pattern is printed, while figure 2(b) is a vertical sectional view which both side are printed. In these drawings, the portion container is composed by a main body 1 and a lid 2. And the laminate plastic sheet forms the portion container body 1 and the lid 2. And the section of the laminated sheet is illustrated, for instance, in vertical sectional views of figure 2, that is, a resin layer of 2µm thickness 4 composed by nitro-cellulose is formed on one or both surfaced of the polypropylene sheet 3 of 80µm thickness containing an inorganic powder. In a case of the portion container body, a printed pattern 5 is prepared on the resin layer of nitro-cellulose 4 formed on one surface of the polypropylene sheet 3 containing an inorganic powder, and the surface is protected by arranging an OP varnish (over print varnish) layer 6 over said resin layer (figure 2(a)). In a case of the lid, a resin layer of nitro-cellulose 4 is prepared on both surfaces of the polypropylene sheet 3. After a printed pattern 5 is prepared on each side, on one surface an OP varnish layer 6 of 1-5µm are arranged and on the reverse side a sealing layer 7 is laminated, and seals the portion container (figure 2(b)). As the resin layer of nitro-cellulose, it is desirable to use a resin layer including titanium oxide pigment, because a concealment covering of paints is improved and printed patterns is clear.

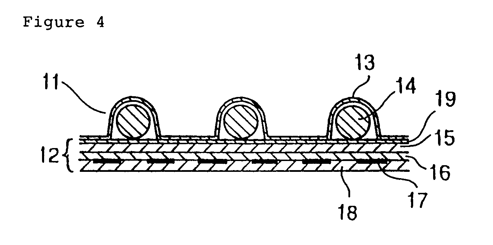

Figure 3 is a perspective view of a PTP, and figure 4 is a A-A sectional view of PTP on one surface of which a pattern is printed. In the drawing, multiple concave pockets 13 are formed on a transparent plastic sheet 11, capsule type medicine 14 is contained in said concave pockets 13 and over which a sealing sheet 12 is stuck. The sealing sheet 12 of this invention is illustrated, for instance, as follows ; That is, on one side surface of polypropylene sheet 15 including 15wt% of inorganic powder, a resin film layer 16 is formed, further a printed pattern 17 is prepared over it. Then OP varnish 18 is coated over said printed pattern 17 according as needs, and the another surface is stuck to PTP main body 11 through sealing layer 19. In a case to print patterns on both surfaces of a sealing sheet, to the both surfaces of a sealing sheet 12 a resin layer 16 is formed, then a printed pattern 17 is prepared on both surfaces. On a printed pattern 17 of one surface an OP varnish layer 18 is prepared, and on an another printed pattern 17 a sealing layer 19 is prepared and is stuck to PTP main body 11 through this sealing layer 19. It is desirable to use a resin layer including titanium dioxide pigment, because a concealment covering of paints is improved and printed letters are not disturbed by printed patterns of each other side.

### EXAMPLES AND COMPARATIVE EXAMPLES

### Example and Comparative Example 1

Non oriented polypropylene sheet of 1mm thick containing 15wt% of calcium carbonate as a filler is processed to a portion container body by a deep-drawing molding method, on the surface of which a nitro-cellulose resin layer of 3µm thickness is coated. And, patterns are printed on the resin layer by a curved surface printing method, then OP varnish is coated on it.

For the comparison, without preparing resin layer, patterns are printed on the portion container body, then OP varnish is coated on it.

Peeling test of the printing ink layer is examined by a cellophane tape method. The print layer printed on the resin layer is not peeled, but the printing ink layer printed on the portion container without preparing a resin layer between them is easily peeled.

### Example 2

Uniaxial oriented polypropylene sheet including 15wt% of inorganic powder is applied as a material for a sealing sheet of PTP. After a resin film layer composed by nitro-cellulose varnish is coated on both surfaces of said uniaxial drawn polypropylene sheet patterns are printed on both surface, OP varnish is coated on one surface and on another surface a sealing layer of acrylic modified polypropylene resin is prepared. Thus the material applied as a sealing sheet of PTP is fabricated. By sticking said sealing layer to a main body of PTP composed by transparent plastic sheet containing tablet type medicine, PTP is formed. Printed patterns on the lid surface of PTP is not peeled off by an actual use, and printed patterns on the reverse surface of sealing sheet can be read clearly through the transparent plastic sheet.

### Example 3

Non oriented polypropylene sheet containing 15wt% of inorganic powder is applied as a material for a sealing sheet of PTP. A polypropylene film layer is laminated to the both side surface of said non oriented polypropylene sheet by a co-extrusion laminating method and patterns are printed on said film layers formed on both side, further, OP varnish is coated on one surface and on another surface a sealing layer of maleic modified polypropylene resin is prepared. Thus the sheet applied as a sealing sheet for PTP is fabricated. By sticking said sealing layer to a main body of PTP composed by transparent plastic sheet containing tablet type medicine, PTP is formed. Printed patterns on the sealing sheet surface of PTP is not peeled off by an actual use, and printed patterns on the reverse surface of sealing sheet is able to be read clearly through the transparent plastic sheet.

As above mentioned, in a laminated plastic sheet for a portion container comprising polypropylene sheets including an inorganic powder, by laminating a resin layer at least on one surface of said sheet, the printability is improved with maintaining the original features such as easy burning out and easy removing of a lid from a main body, and the fine printing is possible, further, it also becomes possible to print patterns on both side of a lid, if necessary.

And, in a sealing sheet for PTP, by preparing a resin layer at least on one surface of said sheet, said surface of the sealing sheet becomes smooth and the printability is improved so as to print very fine patterns on it. When a PTP main body is composed by transparent plastic sheet, because it is usable to read patterns printed on an inner side of lid trough the plastic sheet, patterns can be printed on the both surface of lid material of this invention, if necessary.

## Claims

1. A sheet for packaging material wherein said sheet comprises polypropylene layer containing inorganic powder and is laminated or coated with a resin layer suitable for printing on at least one surface of the polypropylene layer.

2. The sheet of claim 1 for packaging material wherein said polypropylene layers contains an inorganic powder and is laminated or coated with a resin layer suitable for printing on at least one surface thereof, a printing layer is prepared on said resin layer and a transparent resin layer is laminated or coated on said printing layer.

3. The sheet of claim 1 wherein the sheet is a body portion and/or a lid portion of a container.

4. The sheet of claim 1 wherein the sheet is used for a sealing sheet of a press through pack.

5. A laminate sheet for packaging material comprising a polypropylene layer containing an inorganic powder uniformly dispersed therein and resin layer suitable for printing thereon laminated on said polypropylene layer.

6. The laminate sheet for packaging material of claim 5 wherein the polypropylene contains uniformly therein an inorganic powder which is a member selected from the group consisting of silicon dioxide, silicate, titanate, aluminium oxide, kaoline and calcium carbonate, in amount of 20 to 60% by weight based on weight of the powder and polypropylene layer.

7. The laminate sheet for packaging material of claim 5 wherein the polypropylene layer is 20 to 150µm thick and inorganic particles have an average particle size of 5 to 100µm.

8. The laminate sheet for packaging material of claim 5 wherein the resin layer suitable for printing thereon is a member selected from the group consisting of polyethylene, polypropylene, cellulose, ethylene-vinylacetate, polyamide. polyester, acrylic, epoxy, urethane and chloride rubber and is 1 to 20µm thick.

9. The laminated sheet of claim 5 wherein the resin layer suitable for printing thereon contains a printing layer and the printing layer has coated thereon a transparent resin layer.

10. The laminate sheet of claim 9 wherein the transparent resin layer coated on the printing layer is a member selected from the group consisting of cellulose, ethylene-vinylacetate, polyamide, polyester, acrylic, epoxy, urethane and chloride rubber and is 1 to 5µm thick.
